(19) Europäisches Patentamt
European Patent Office
Office européen des brevets

(11) **EP 3 995 249 B1**

(12) **EUROPEAN PATENT SPECIFICATION**

(45) Date of publication and mention
of the grant of the patent:
**17.04.2024 Bulletin 2024/16**

(21) Application number: **21202411.1**

(22) Date of filing: **13.10.2021**

(51) International Patent Classification (IPC):
**B23K 26/00** (2014.01)    **B23K 26/082** (2014.01)
**B23K 26/08** (2014.01)    **B23K 26/352** (2014.01)
**B23K 26/362** (2014.01)    **B23K 26/402** (2014.01)
**B41M 3/14** (2006.01)    **B65D 23/00** (2006.01)
**B23K 101/04** (2006.01)    **B23K 103/00** (2006.01)

(52) Cooperative Patent Classification (CPC):
**B23K 26/0006; B23K 26/0821; B23K 26/0823;**
**B23K 26/0838; B23K 26/355; B23K 26/362;**
**B23K 26/402;** B23K 2101/04; B23K 2103/42;
B23K 2103/54; B41M 5/24; B41M 5/26;
B41M 5/267; B65D 23/00; B65D 2203/00;    (Cont.)

(54) **PATTERN FORMATION APPARATUS FOR BASE MATERIAL AND PATTERN FORMATION METHOD**

MUSTERBILDUNGSVORRICHTUNG FÜR AUSGANGSMATERIAL UND MUSTERBILDUNGSVERFAHREN

APPAREIL DE FORMATION DE MOTIFS DE MATÉRIAU DE BASE ET PROCÉDÉ DE FORMATION DE MOTIFS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.10.2020 JP 2020174705**
**08.06.2021 JP 2021095700**

(43) Date of publication of application:
**11.05.2022 Bulletin 2022/19**

(73) Proprietor: **Ricoh Company, Ltd.**
**Tokyo 143-8555 (JP)**

(72) Inventors:
• **MIYANISHI, Hideiji**
**Tokyo, 143-8555 (JP)**
• **HIRAYAMA, Rie**
**Tokyo, 143-8555 (JP)**
• **FUJITA, Kazuhiro**
**Tokyo, 143-8555 (JP)**

(74) Representative: **SSM Sandmair Patentanwälte Rechtsanwalt Partnerschaft mbB Joseph-Wild-Straße 20 81829 München (DE)**

(56) References cited:
DE-A1-102014 207 220    JP-A- 2011 011 819
US-A1- 2015 217 403    US-A1- 2017 340 518

(52) Cooperative Patent Classification (CPC): (Cont.)
     B65D 2501/0081

## Description

Field of the Invention

The present invention relates to a pattern formation apparatus for a base material according to the preamble of claim 1 (see for example US 2015/217403 A1), and a pattern formation method, see claim 3.

Description of the Related Art

Patent Literature 1 (Japanese Unexamined Patent Application Publication No. 2011-011819) discloses a configuration of a polyethylene terephthalate (PET) bottle that is made up of a cap and a bottle without using a label by displaying description items on a bottle 2 in the form of marking and printing based on direct thermal processing or in the form of marking and printing based on molding using a mold.

An object of the present invention is to reduce variation in patterns formed on a plurality of base materials.

## SUMMARY OF THE INVENTION

According to a first aspect of the present invention, a pattern formation apparatus is defined in claim 1, and is configured to irradiate each of a plurality of base materials being conveyed, with laser such that one of a light path length and a beam size at a position of the plurality of base materials is approximately constant, to form a pattern on a surface of each of the plurality of base materials.

A further embodiment of the apparatus is defined in claim 2.

According to a second aspect of the present invention, a pattern forming method is defined in claim 3.

According to the present invention, it is possible to reduce variation in patterns formed on a plurality of base materials.

## BRIEF DESCRIPTION OF THE DRAWINGS

FIG. 1 is a diagram illustrating an example of a predetermined shape according to an embodiment of the present invention;

FIGS. 2A and 2B are diagrams illustrating a configuration example of a dot portion according to the present embodiment, where FIG. 2A is a top view and FIG. 2B is a cross-sectional view as viewed from an arrow C-C in FIG. 2A;

FIGS. 3A and 3B are pictures of dot portions according to the present embodiment taken by a scanning electron microscope, where FIG. 3A is a perspective view as viewed from above and FIG. 3B is a perspective view as viewed from a cross-sectional direction of an arrow D-D in FIG. 3A;

FIG. 4 is a diagram illustrating a manufacturing apparatus according to the present embodiment;

FIG. 5 is a diagram for explaining laser irradiation according to the present embodiment;

FIGS. 6A to 6E are diagrams for chronologically explaining laser irradiation according to the present embodiment;

FIG. 7 is a diagram illustrating a modification of the manufacturing apparatus illustrated in FIG. 4;

FIG. 8 is a top view of the modification illustrated in FIG. 7;

FIG. 9 is a side view of the modification illustrated in FIG. 7;

FIG. 10 is a diagram for explaining laser irradiation according to the modification illustrated in FIG. 7;

FIG. 11 is a diagram illustrating a second modification of the manufacturing apparatus illustrated in FIG. 4;

FIG. 12 is a top view of the second modification illustrated in FIG. 11;

FIG. 13 is a diagram for explaining laser irradiation according to the second modification illustrated in FIG. 11;

FIG. 14 is a diagram illustrating a third modification of the manufacturing apparatus illustrated in FIG. 4; and

FIG. 15 is a top view of the third modification illustrated in FIG. 14.

The accompanying drawings are intended to depict exemplary embodiments of the present invention and should not be interpreted to limit the scope thereof. Identical or similar reference numerals designate identical or similar components throughout the various drawings.

## DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

An embodiment of the present invention will be described in detail below with reference to the drawings. Modes for carrying out the present invention will be described below with reference to the drawings. In each of the drawings, the same components are denoted by the same reference symbols, and repeated explanation may be omitted. In addition, the embodiments described below illustrate an apparatus that implements the technical idea of the present invention, and the present invention is not limited to the embodiments described below. Dimensions, materials, shapes, relative positions, and the like of the components described below are illustrated by way of example and not intended to limit the scope of the present invention unless otherwise specified. Furthermore, sizes, positional relationships, and the like of members illustrated in the drawings may be exaggerated for the sake of clarity of description.

A base material according to the present invention is a base material in which a predetermined shape that constitutes a pattern is formed in at least a partial region. The base material means a material portion of an object. The container to be used in the present invention includes a polyethylene terephthalate (PET) bottle that is made of a material including PET, and that contains a beverage.

A shape and a material of the container are not specifically limited.

"At least the partial region" of the base material includes a region on a surface of the base material. The surface of the base material means a surface of the material that is exposed to outside air or the like. In the embodiments, a phrase of "the surface of the base material" is used as a relative phrase of an internal portion of the base material; therefore, for example, in the case of a plate-shaped base material, both of a front surface and a back surface of the base material correspond to the surface of the base material. Further, in the case of a tubular base material, both of an outer surface and an inner surface of the base material correspond to the surface of the base material.

The pattern includes a letter, a code, such as a barcode, a graphic, an image, and the like, and displays information, such as a name, an identification number, a manufacturer, and a manufacturing date and time, on the container or contents, such as a beverage, that is contained in the container, for example.

For the PET bottle according to the present invention, the above-described information may be displayed by attaching a recording medium on which the above-described information is recorded onto the surface of the container; however, in the embodiments, by forming a pattern representing the above-described information on the surface of the base material that constitutes the container, the above-described information is displayed without using the recording medium.

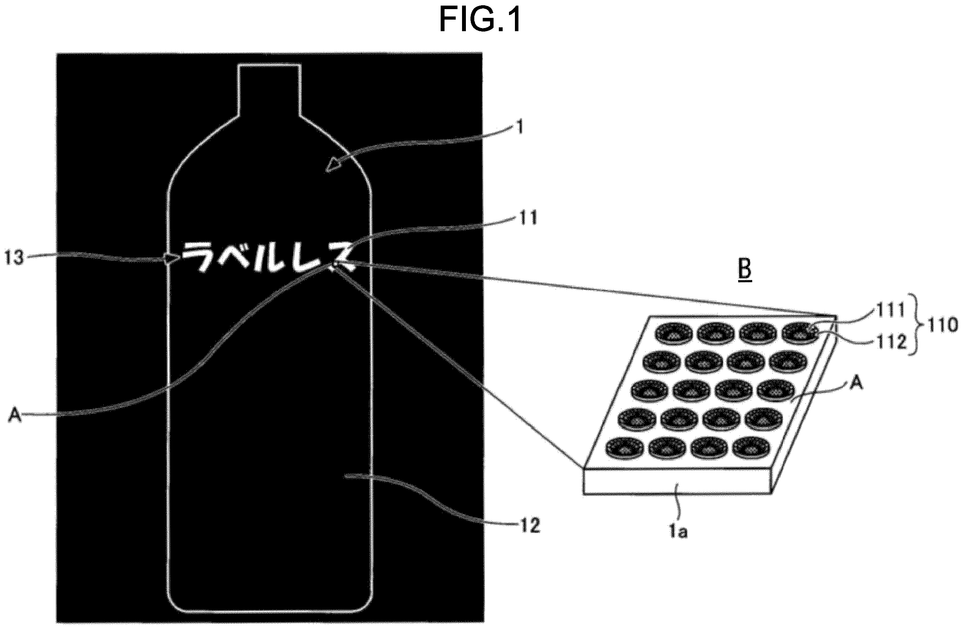

FIG. 1 is a diagram for explaining an example of a predetermined shape that is formed on a base material according to the present embodiment. FIG. 1 illustrates a part of a base material 1a that constitutes a container 1 with a surface on which a pattern 11 is formed. The container 1 and contents constitute a containing body. The container 1 is configured with, according to the present invention, the base material 1a that is made of PET resin having transparency to visible light. Meanwhile, the visible light is light having a wavelength with the lower bound of about 360 nanometers (nm) to about 400 nm, and the upper bound of about 760 nm to about 1600 nm.

The pattern 11 includes a character string of "labelless" in katakana. A region A is a partial region of a letter "s" in katakana in the pattern 11. A perspective view B is an enlarged schematic view of the region A for explaining details of the configuration of the pattern 11.

As illustrated in the perspective view B, the region A includes a plurality of dot portions 110. The dot portions 110 are formed in at least a partial region of the base material, and are illustrated as one example of predetermined shapes that constitute the pattern. Meanwhile, the predetermined shape includes a shape that is formed on the surface of the base material, and an inner shape, such as an air space portion, that is present under the shape formed on the surface of the base material.

Each of the dot portions 110 is, as one visual example, a slightly opaque portion and includes a recess 111 and a protrusion 112. The recess 111 is a portion that is recessed from the surface of the base material 1a that constitutes the container 1, and is one example of a predetermined recess. The protrusion 112 is a portion that protrudes from the surface of the base material 1a that constitutes the container 1, and is one example of a predetermined protrusion. The protrusion 112 is formed around the recess 111 so as to enclose the recess 111.

The plurality of dot portions 110 are formed as an aggregation on the base material 1a that constitutes the container 1, and forms the character string of "labelless" in the pattern 11. Here, the aggregation indicates what is formed by aggregating individual entities, and the pattern 11 is formed of an aggregation of the plurality of dot portions 110.

In the base material 1a, a pattern region 13 in which the pattern 11 including the plurality of dot portions 110 is formed corresponds to a first region. Further, a non-pattern region 12 other than the first region in the base material 1a corresponds to a second region.

In the pattern region 13, because the plurality of dot portions 110 are formed, a reflection direction and optical diffusion of light that enters the container 1 are different from those in the non-pattern region 12. Therefore, at least one of optical transmittance and optical reflectance of light that enters the container 1 is different between the pattern region 13 and the non-pattern region 12. Due to the difference in at least one of the optical transmittance and the optical reflectance, a person who views the container 1 is able to view the pattern 11 formed on the container 1.

Further, an entire width (dot width) of each of the dot portions 110 and an interval (dot interval) between the dot portions 110 are small relative to the pattern 11. Therefore, a person who views the container 1 is able to view the letter of "labelless" in the pattern 11 without visually recognizing the dot portions 110.

An inter-dot gap that can prevent the dot portions 110 from being visually recognized varies depending on a visual acuity of a person who views the container 1, a distance between eyes and the container 1, or the like, but it is preferable to set the gap to 100 micrometers ($\mu$m) or less. Further, although it is ideal to reduce the dot width as much as possible, a preferable dot width is about 100 um or less as a preferable size with which the shapes of the dot portions are not distinguishable. This will be described in detail below.

If a person with 6/4 vison views the container 1 at a distance of about 30 centimeters (cm), the person is generally able to recognize a black-and-white point (dot) with a size of 50 $\mu$m. This limit value increases with a decrease in contrast between black and white, but is generally about 50 $\mu$m. However, a dot with a size of 30 $\mu$m may be viewed if only the dot is present, and in some cases, a dot with a size of 10 $\mu$m may be viewed if the dot has high contrast.

Furthermore, if the two dot portions 110 are present in an adjacent manner, whether the two dot portions 110 can be viewed depends on resolution of the human eye or the like. Meanwhile, the resolution is a minimum distance at which two points can be recognized as two separate points.

The resolution of the human eye is generally 100 $\mu$m at a distance of 30 cm, although it depends on a visual acuity. 30 cm corresponds to a distance at which the person views information, such as a label, displayed on a PET bottle when the person picks up the PET bottle containing drinking water or the like in his/her hand. In other words, if the person picks up the PET bottle while slightly flexing an elbow, an interval between the eyes of the person and the PET bottle is about 30 cm. The distance varies in a range from 30 cm to 50 cm by taking into account a physical size of the person. The resolution is about 100 $\mu$m at the distance of 30 cm, and about 160 $\mu$m at the distance of 50 cm.

Further, as another index, when 200 dots per inch (dpi) is ensured as a boundary of the resolution, and if the gap between the adjacent dots is 130 $\mu$m or less, the dots are viewed as a unity, instead of being separated from one another.

As described above, by preferably setting the gap between the dots to 160 $\mu$m or less, or more preferably setting the gap to 100 $\mu$m or less, the dot portions 110 are viewed as a continuous body instead of being viewed as separate dots, so that it is possible to view a pattern, such as the letter of "labelless", in the pattern 11. Furthermore, if the size of the dot is larger than 100 $\mu$m, shape changes of the dots may be visually recognized. Therefore, by preferably setting the dot size to 160 $\mu$m or less, or more preferably setting the dot size to 100 $\mu$m or less, even if the shapes of the dots are changed, it is possible to perceive the dots as a uniform pattern, so that it is possible to view a pattern, such as a letter, that is an aggregation of the dots as a uniform pattern without graininess.

To form the dot portions 110, various machining methods, such as laser machining, electric spark machining, etching, cutting machining, or a molding machining using a mold, may be applied. Among the machining methods as described above, the laser machining method is preferable because it is possible to machine the base material in a non-contact manner, and it is possible to perform machining at a high speed by using laser light scanning, a light source array, pattern exposure, or the like.

In the laser machining, it is possible to change the sizes, the shapes, the depths, or the like of the dot portions 110 by adjusting optical energy of laser light (laser beam) to be emitted, a size of the laser beam, or an irradiation time, for example. Further, a cross-sectional strength distribution of the laser beam is generally a Gaussian distribution, but it is possible to generate a strength distribution in a top hat form in which a center of the strength distribution is flat, by adjusting the strength distribution by a combination of laser beams from an array light source or by designing an irradiation optical system. Furthermore, it is desirable to adjust a laser irradiation size by a light source and an optical system and maintain an almost constant laser irradiation size during machining. Here, the constant means that the size is not substantially changed and falls within an allowable range of machining accuracy, and includes variation within an allowable range of about a few percent depending on machining accuracy.

The recess 111 in each of the dot portions 110 is formed by melting, burning, vaporizing, or deforming a part of the base material 1a at a laser light irradiation position. The protrusion 112 is formed such that a part of the base material 1a that is broken up from the recess 111 adheres to and is solidified in the vicinity of the recess 111 without being burned out or vaporized. This processing mainly uses thermal energy, and therefore, it is preferable to adopt resin or the like with relatively low thermal conductivity as a material of the base material 1a; however, the processing may be applied to other materials, such as glass.

Furthermore, by controlling thermal conductivity, it is possible to form various predetermined shapes, such as the dot portions 110. To control thermal conductivity, for example, it may be possible to adopt a material with high thermal conductivity as the base material 1a, or it may be possible to firmly attach a different material with high thermal conductivity to the base material 1a in order to rapidly transfer heat that is generated by the base material 1a due to irradiation with the laser light. Examples of the different material with high thermal conductivity include a cooling liquid and a metal.

Moreover, a phenomenon, such as melting, evaporation, crystallization, or foaming, in the laser machining irregularly occurs in an irradiation region, so that a surface of the pattern region 13 may get rough, and surface roughness of the pattern region 13 is likely to increase relative to the non-pattern region 12. With an increase in the surface roughness, in the pattern region 13, the optical diffusion with respect to light that enters the container 1 is increased relative to the non-pattern region 12. As a result, the contrast of the pattern 11 is increased and visibility of the pattern 11 is further increased. In this point, the laser machining is more preferable.

Furthermore, in the present embodiment, the pattern is formed of the aggregation of the plurality of dot portions 110 each including at least one of the recess 111 and the protrusion 112, so that a surface area is increased along the shapes of the recesses 111 and the protrusions 112 and a region with large surface roughness is further increased as compared to a pattern that is formed of a bundle of grooves and hollows. Moreover, the pattern is formed of the aggregation of the plurality of dot portions 110, so that the surface area is further increased along the shapes of the plurality of dot portions 110. Accordingly, the optical diffusion is further increased, so that the contrast is increased and the visibility is further improved.

Meanwhile, in the example illustrated in the perspective view B, the dot portions 110 are formed by being regularly arranged in a square-lattice shape, but embodiments are not limited to this example. The dot portions may be formed by being arranged in a triangular-lattice shape or a honeycomb shape, or may be formed irregularly such that arrangement intervals are different from one another instead of being regularly arranged.

Furthermore, while the pattern 11 including the character string of "labelless" is illustrated, embodiments are not limited to this example. The pattern 11 may include an arbitrary character string, a graphic, a photograph, a symbol, a code, such as a barcode or a quick response (QR) code, or a combination of the character string, the graphic, the photograph, the symbol, and the code. In other words, the pattern 11 is an image, and the image is formed by the predetermined shapes, such as the dot portions 110.

Configuration example of dot portion 110

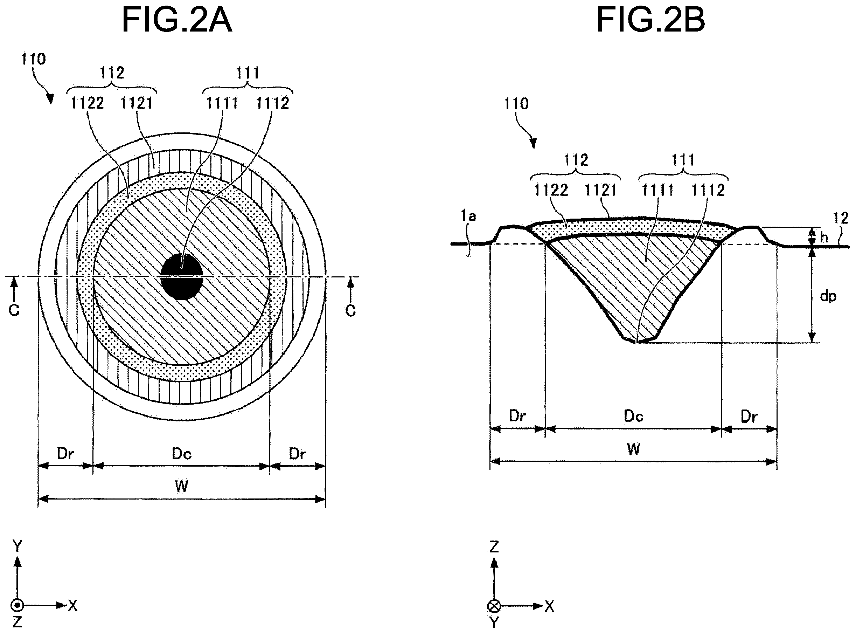

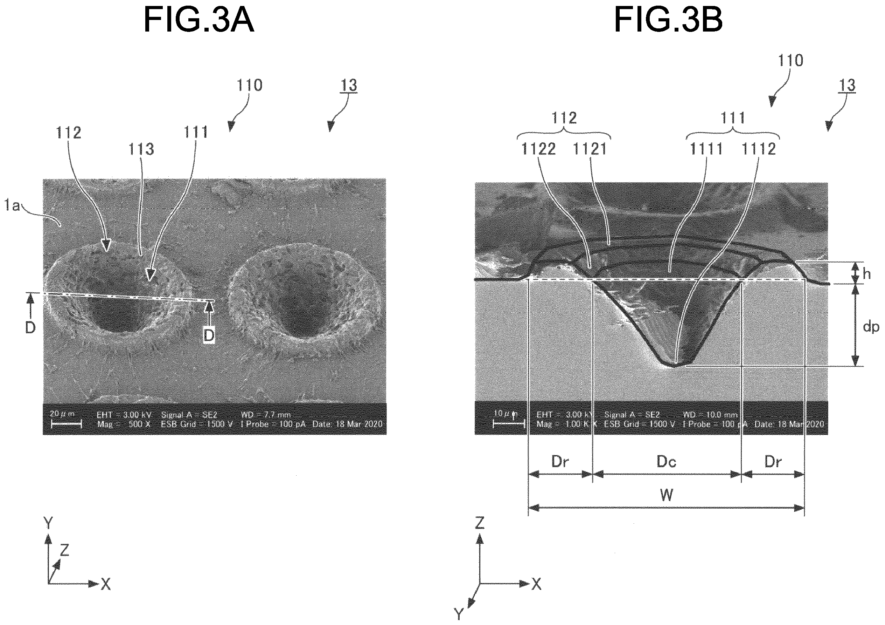

FIGS. 2A and 2B are diagrams for explaining an example of a configuration of the dot portion 110 according to the present embodiment, where FIG. 2A is a top view and FIG. 2B is a cross-sectional view as viewed from an arrow C-C in FIG. 2A. FIGS. 3A and 3B are pictures of the dot portions 110 according to the present embodiment taken by a scanning electron microscope (SEM), where FIG. 3A is a perspective view as viewed from above and FIG. 3B is a perspective view as viewed from a cross-sectional direction of an arrow D-D in FIG. 3A. FIGS. 3A and 3B illustrate an SEM picture in which a part of the pattern region 13 is observed in an enlarged manner. In FIG. 3A, two of the dot portions 110 are entirely observed, parts of other two of the dot portions 110 are slightly observed in the positive Y-axis direction, and parts of other two of the dot portions 110 are slightly observed in the negative Y-axis direction. Furthermore, the dot width is set to about 100 um.

As illustrated in FIGS. 2A to 3B, each of the dot portions 110 includes the recess 111 and the protrusion 112. The recess 111 includes a first inclined surface 1111 (diagonal line hatching portion) and a bottom portion 1112 (black portion), and is formed in a cup shape. A recess width Dc represents a width of the recess 111, and a depth dp represents a height of the bottom portion 1112 with respect to the surface of the non-pattern region 12 (length in the Z-axis direction).

Further, the protrusion 112 includes an apex portion 1121 (vertical line hatching portion) and a second inclined surface 1122 (pear-skin hatching portion), and is formed in a torus shape. Meanwhile, the torus shape is a surface of revolution generated by revolving a circle. A torus width Dr represents a width of a torus portion of the protrusion 112 in a radial direction, and a height h represents a height of the apex portion 1121 with respect to the surface of the non-pattern region 12 (length in the Z-axis direction).

The dot width W represents an entire width of the dot portion 110. The first inclined surface 1111 and the second inclined surface 1122 are continuous surfaces. The continuous surfaces indicate surfaces that are made of the same material and continued without any stepped portion.

Furthermore, as illustrated in FIGS. 3A and 3B, a micro asperity portion 113 is formed on a surface of each of the recess 111 and the protrusion 112, and the surface gets rough. The asperity portion 113 is one example of an asperity portion including a recess and a protrusion that are smaller than the predetermined shape. The asperity portion 113 includes a recess and a protrusion with widths that are smaller than the dot width W of the dot portion 110, and typically includes a recess and a protrusion with widths of about 1 $\mu$m to 10 $\mu$m.

Moreover, as illustrated in FIG. 3A, machining chips that are generated at the time of machining the dot portions 110 are scattered in each of regions between the dot portions 110, and surfaces get rough due to the machining chips. In the pattern region 13, the surfaces get rough due to the asperity portion 113 and the machining chips, so that the surface roughness is increased as compared to the non-pattern region.

The dot portions 110 can be formed by, for example, irradiating the base material 1a with laser light and denaturalizing the surface of the base material 1a. The single dot portion 110 is formed by collecting laser light onto a single point on the base material 1a. Furthermore, the plurality of dot portions 110 are formed by performing two-dimensional scanning using the laser light. Alternatively, the plurality of dot portions may be formed by a plurality of pieces of laser light emitted from a plurality of laser light sources that are arranged as an array. Moreover, it may be possible to form the plurality of dot portions 110 in a parallel manner by single exposure by irradiating a mask member, which has a plurality of light transmission openings corresponding to positions of the respective dot portions 110, with expanded laser light, and applying a group of a plurality of pieces of transmitted laser light that have transmitted through the light transmission openings of the mask member.

As a laser light source that emits laser light, various laser light sources are applicable. It is preferable to use a laser light source capable of performing pulsed oscillation at a femtosecond time scale or picosecond to nanosecond time scales. Examples of a solid-state laser include YAG lasers and titanium-sapphire lasers. Examples of a gas laser include argon lasers, helium neon lasers, and carbon dioxide lasers. A semiconductor laser is also preferable because it is small. Furthermore, a fiber laser which is one kind of solid-state lasers and in which an optical fiber is used as an amplifying medium is a most optimal light source in terms of having high peak energy and having a potential to be reduced in size.

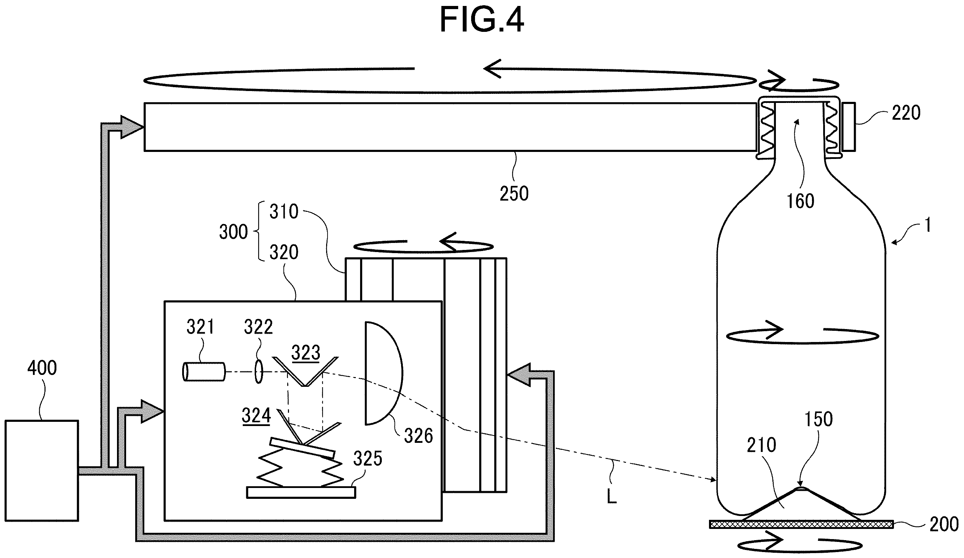

FIG. 4 is a diagram illustrating a manufacturing apparatus according to the present embodiment. The manufacturing apparatus illustrated in FIG. 4 includes a manufacturing line 200 that is one example of a conveying unit for conveying the container 1 having a cylindrical shape, a rotation roller 250, a fixing plate 220 that holds a cap (opening portion) 160 that seals the container 1, and an irradiation unit 300 that irradiates the container 1 conveyed by the manufacturing line 200 with laser to form the pattern 11 on the base material 1a of the container 1. The manufacturing apparatus is one example of a pattern formation apparatus. The manufacturing apparatus illustrated in FIG. 4 is incorporated in an apparatus for manufacturing the container 1 or the containing body in a factory, and is included in one process that is determined in the flow of a manufacturing line of the container 1 or the containing body.

The rotation roller 250 is driven to rotate, at a predetermined speed, about an axis that is positioned with respect to the manufacturing line 200.

The fixing plate 220 is positioned with respect to the manufacturing line 200, holds the cap 160 in a sandwiching manner with the rotation roller 250, and rotates the container 1 on the manufacturing line 200 in conjunction with the rotation roller 250. The fixing plate 220 may include a configuration that prevents the container 1 from flying up.

The manufacturing line 200 includes a rotation plate 210 that holds a depression 150 on a bottom surface of the container 1. The rotation plate 210 is formed in a conical shape that conforms to the depression 150 on the bottom surface of the container 1, and is rotatable about a central shaft that is fixed on the manufacturing line 200 that is movable.

The irradiation unit 300 includes a tracking horizontal deflection device 310 and a vertical deflection irradiation device 320. The vertical deflection irradiation device 320 includes, from upstream of an optical path, a laser 321, a lens 322, a mirror 323, a mirror 324, a pan tilt zoom (PTZ) actuator 325, and a wide-angle lens 326.

A control device 400 conveys the container 1 by controlling the manufacturing line 200, and causes the rotation roller 250 to rotate in synchronization with a conveying speed of the container 1 conveyed by the manufacturing line 200. Accordingly, the container 1 rotates about a central axis in the vertical direction at a rotation speed synchronized with the conveying speed of the container 1 conveyed by the manufacturing line 200, in conjunction with the rotation of the rotation roller 250.

The control device 400 controls the vertical deflection irradiation device 320 and the tracking horizontal deflection device 310 of the irradiation unit 300 to irradiate the container 1 with laser.

The vertical deflection irradiation device 320 is positioned with respect to the manufacturing line 200, repeats vertical scanning with laser light that is modulated in accordance with label image data that is sent from a drawing control device, and causes the laser light to enter the tracking horizontal deflection device 310.

The tracking horizontal deflection device 310 is rotatable, at a predetermined speed, about a shaft that is positioned and fixed with respect to the manufacturing line 200, reflects the laser light emitted from the vertical deflection irradiation device 320, scans the container 1 in the vertical direction, and tracks the container 1 while revolving in a horizontal direction.

Accordingly, the tracking horizontal deflection device 310 is able to track and scan the container 1 that moves while rotating.

If the base material 1a is polyethylene terephthalate, it is confirmed, by measurement, that there is a peak wavelength of a light absorption band in each of an ultraviolet region and an infrared region. As a light source of the laser 321, a laser light source that matches a range of ±50 nm of a light absorption peak wavelength is used. The matching range may be a half width of the absorption band. As of 2020, for example, ALC-1680-14000-FM400.22-Doppia manufactured by AKELA laser corporation corresponds to a laser that matches the light absorption peak wavelength of 1660 nm.

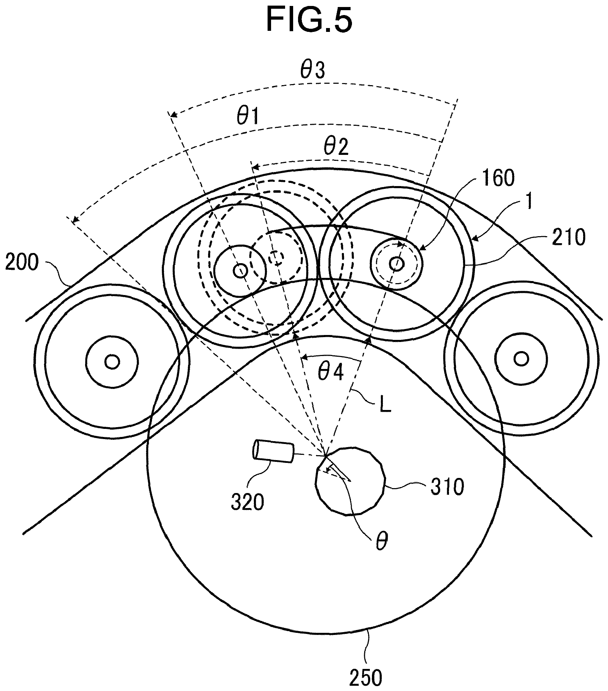

FIG. 5 is a diagram for explaining laser irradiation according to the present embodiment.

It is assumed that r is a radius of the cap, R1 is a radius of the rotation roller, R2 is a radius of the fixing plate = R1 + r, R3 is a radius of a central portion of the manufacturing line = (R1 + R2) / 2, θ1 is an angle of the rotation roller when the rotation roller rotates around the cap once, θ2 is an angle at the end of rotation of the cap, θ3 is a termination rotation angle of the manufacturing line, θ is a rotation angle of a polygon mirror, Ω1 is an angular velocity of the rotation roller, Q2 is an angular velocity of a point of contact between the fixing plate and the cap (angular velocity of the line), and L is a distance between conical rotation shafts ≥ 2 × π × r.

From a relative relationship among contact point lines of rotation trajectories, R1 × θ1 = r × 2π × 2 and R2 × θ2 = r × 2π, and rotation is performed by setting the rotation angle of the rotation roller by Expression below.

$$\theta 1 = 2 \times \theta 2 \times R2 / R1$$

Therefore, the angular velocity Ω1 of the rotation roller is set such that Ω1 = 2 × Ω2 × R2/R1.

A formation condition of an n-gon mirror meets

Expression below.

$$\theta 3 = L / ((R1 + R2) / 2)$$

$$\theta = \theta 3 / 2$$

$$n = 2\pi / \theta \text{ (integer value)}$$

Therefore, an angular velocity at which n = $2\pi \times (2 \times R1 + r) / L$ (integer value) is obtained is set such that $\Omega 2 / 2$.

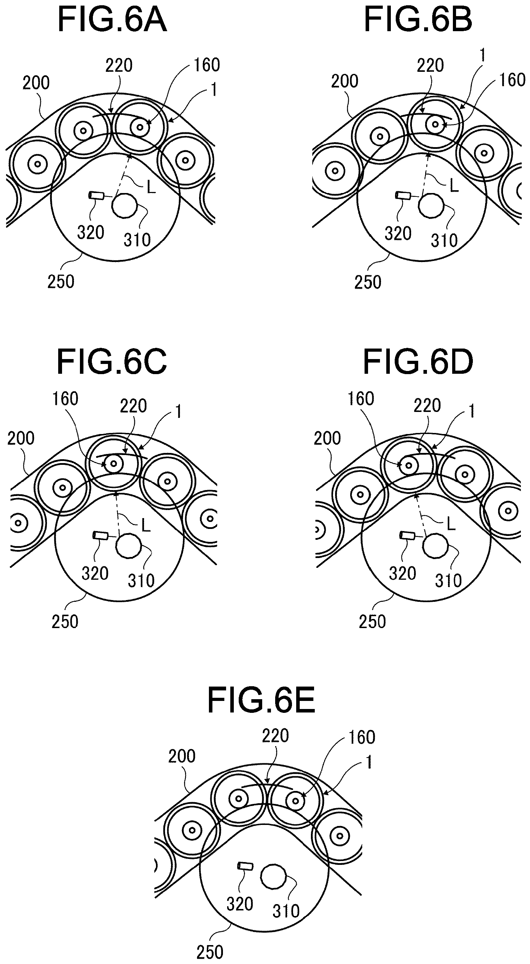

FIGS. 6A to 6E are diagrams for chronologically explaining laser irradiation according to the present embodiment. The manufacturing apparatus according to the present embodiment is able to directly form the pattern 11 on the container 1 at a high speed by repeating processes illustrated in FIGS. 6A to 6E.

In FIG. 6A, the cap 160 of the container 1 enters a gap between the fixing plate 220 and the rotation roller 250, is sandwiched between the fixing plate 220 and the rotation roller 250 by cooperation of the fixing plate 220 and the rotation roller 250, and starts to rotate on the shaft of the rotation plate 210. The vertical deflection irradiation device 320 performs scanning in the vertical direction with laser light that is modulated in accordance with image data. The tracking horizontal deflection device 310 reflects laser light coming from the vertical deflection irradiation device 320 and scans the container 1 in the vertical direction.

In FIG. 6B, the cap 160 of the container 1 continues to rotate on the shaft of the rotation plate 210 while being sandwiched between the fixing plate 220 and the rotation roller 250 by cooperation of the fixing plate 220 and the rotation roller 250 and while being conveyed by the manufacturing line 200. The vertical deflection irradiation device 320 continues to perform scanning in the vertical direction with laser light that is modulated in accordance with the image data. The tracking horizontal deflection device 310, by reflecting the laser light coming from the vertical deflection irradiation device 320 while rotating, changes the direction of a light path L of the laser and performs scanning in the vertical direction while tracking the container 1. In this state, drawing is performed on about one third of an entire circumferential surface of the container 1 by laser irradiation.

In FIG. 6C, the cap 160 of the container 1 continues to rotate on the shaft of the rotation plate 210 while being sandwiched between the fixing plate 220 and the rotation roller 250 by cooperation of the fixing plate 220 and the rotation roller 250 and while being further conveyed by the manufacturing line 200. The vertical deflection irradiation device 320 continues to perform scanning in the vertical direction with laser light that is modulated in accordance with the image data. The tracking horizontal deflection device 310, by reflecting the laser light coming from the vertical deflection irradiation device 320 while rotating, further changes the direction of the light path L of the laser and performs scanning in the vertical direction while tracking the container 1. In this state, drawing is performed on about two thirds of the entire circumferential surface of the container 1 by laser irradiation.

In FIG. 6D, the cap 160 of the container 1 reaches an end portion of the fixing plate 220, and stops rotation on the shaft of the rotation plate 210 while being sandwiched between the fixing plate 220 and the rotation roller 250 by cooperation of the fixing plate 220 and the rotation roller 250. The vertical deflection irradiation device 320 terminates scanning in the vertical direction with laser light that is modulated in accordance with the image data, in synchronization with termination of the rotation of the container 1. The tracking horizontal deflection device 310, by reflecting the laser light coming from the vertical deflection irradiation device 320 while rotating, further changes the direction of the light path L of the laser and further performs scanning in the vertical direction while tracking the container 1. In this state, drawing is performed on the entire circumferential surface of the container 1 by laser irradiation.

In FIG. 6E, the cap 160 of the container 1 to be conveyed next is going to enter the gap between the fixing plate 220 and the rotation roller 250. Thereafter, the processes described above with reference to FIGS. 6A to 6E are repeated.

As illustrated in FIGS. 4 to 6E, the manufacturing apparatus according to the present embodiment includes the irradiation unit 300 that irradiates each of the containers 1 conveyed by the manufacturing line 200 with laser to form a pattern on the surface of each of the containers 1, and the manufacturing line 200 includes the movable rotation plate 210 that rotates each of the containers 1, and conveys the container 1 while rotating the container 1.

With this configuration, it is possible to change an orientation of an irradiation position of the container 1 with respect to a laser irradiation direction, so that it is possible to reduce distortion of the pattern caused by the orientation of the irradiation position of the container 1 with respect to the laser irradiation direction.

The tracking horizontal deflection device 310 reflects the laser light while rotating, so that the irradiation unit 300 is able to change a direction in which the laser is emitted, along a conveying direction of the container 1.

With this configuration, it is possible to track, with the laser, the container 1 being conveyed, so that it is possible to reduce variation in a laser light path length with respect to the irradiation position of the container 1 or variation in a beam size at the position of the container 1, and it is possible to reduce variation in the pattern caused by the variation in the laser light path length or the beam size at the position of the container 1.

The manufacturing line 200 conveys the container 1 through a path for which the tracking horizontal deflection device 310 of the irradiation unit 30 that emits laser is located inside, and, more preferably, through a path that is concentric with a rotation center of the tracking horizontal deflection device 310. Here, the concentric does not strictly indicate a concentric circle, but indicates a state in which all of lines intersect with one another on an extended line of a path to the tracking horizontal deflection device 310 of the irradiation unit 300.

With this configuration, it is possible to maintain an approximately constant laser light path length between a reflection surface of the tracking horizontal deflection device 310 and the container 1 being conveyed or an approximately constant beam size at the position of the container 1 while rotating the tracking horizontal deflection device 310 in synchronization with the container 1 being conveyed, so that it is possible to reliably reduce variation in the pattern caused by variation in the laser light path length or the beam size at the position of the container 1. Here, approximately constant means that variation does not substantially occur and falls within an allowable range of machining accuracy of the container 1, and includes variation within an allowable range of about a few percent depending on machining accuracy. Alternatively, approximately constant includes variation within an allowable range in which patterns formed on the plurality of containers 1 are not different when they are viewed, and, as one example, within an allowable range of about ±10%.

An arrangement interval of the plurality of containers 1 on the manufacturing line 200 is set to longer one between a distance that is needed for the container 1 to make one rotation and a diameter of the container 1. With this configuration, it is possible to terminate drawing by laser irradiation when the single container 1 makes one rotation, and start to perform drawing on the next container 1 by laser irradiation, so that it is possible to continuously perform drawing by laser irradiation on the plurality of containers 1 and it is possible to improve productivity.

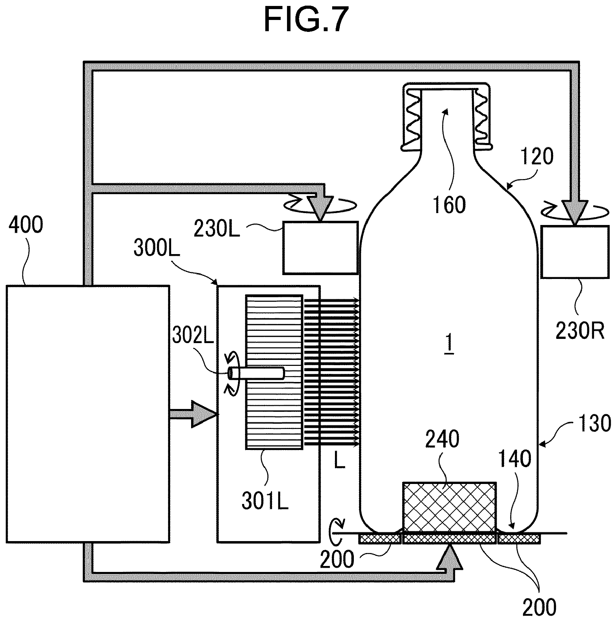

FIG. 7 is a diagram illustrating a modification of the manufacturing apparatus illustrated in FIG. 4. The manufacturing apparatus illustrated in FIG. 7 includes the manufacturing line 200 that supports a bottom portion 140 of the container 1 and the control device 400 similarly to the manufacturing apparatus illustrated in FIG. 4, and further includes an irradiation unit 300L that is arranged on the left side of the manufacturing line 200 in the conveying direction, rotation units 230L and 230R that come into contact with a boundary of a shoulder portion 120 and a body portion 130 of the container 1, and an interval fixation unit 240 that fixes an interval between the plurality of containers 1.

The irradiation unit 300L includes a laser array unit 301 that emits laser, and an angle changing unit 302 that changes an angle of the laser array unit 301, and irradiates the body portion 130 of the container 1 with laser.

The control device 400 conveys the container 1 by controlling the manufacturing line 200, and causes the container 1 to rotate by controlling the rotation units 230L and 230R.

The control device 400 irradiates the container 1 with laser by controlling the laser array unit 301 and the angle changing unit 302 of the irradiation unit 300L.

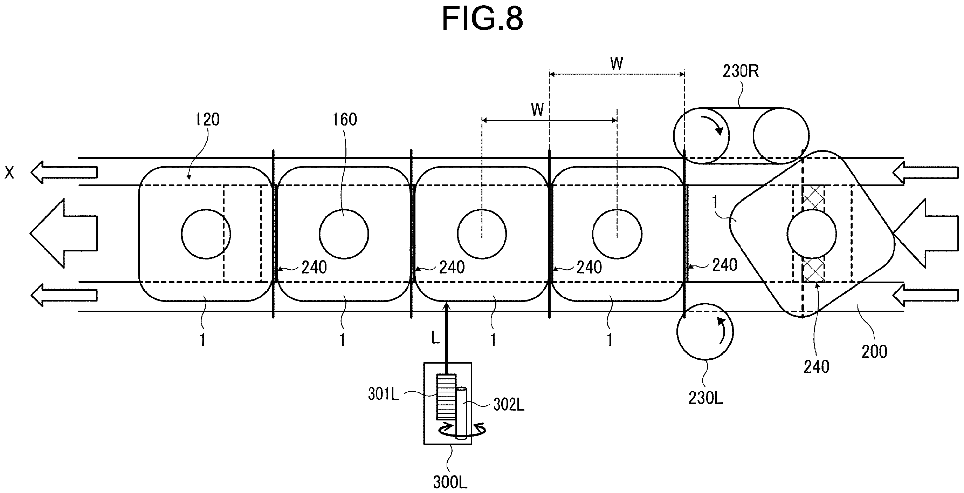

FIG. 8 is a top view of the modification illustrated in FIG. 7. The rotation units 230L and 230R align orientations of the plurality of containers 1 by rotating the containers 1, and press the successive container 1 against the foregoing container 1 via the interval fixation unit 240. In particular, if the containers 1 have square shapes, the rotation units 230L and 230R align the orientations of the containers 1 such that the adjacent containers 1 can more closely be attached to each other.

The manufacturing apparatus according to the present modification includes the irradiation unit 300 that irradiates each of the containers 1 conveyed by the manufacturing line 200 with laser to form a pattern on the surface of each of the containers 1, and the rotation units 230L and 230R rotate the containers 1 to align the orientations of the plurality of containers 1.

With this configuration, even for the container 1 whose cross section has a certain shape other than a cylindrical shape, it is possible to maintain ant approximately constant laser light path length with respect to the container 1 being conveyed or an approximately constant beam size at the position of the container 1, so that it is possible to reliably reduce variation in the pattern caused by variation in the laser light path length or the beam size at the position of the container 1. Here, approximately constant means that variation does not substantially occur and falls within an allowable range of machining accuracy of the container 1, and includes variation within an allowable range of about a few percent depending on machining accuracy. Alternatively, approximately constant includes variation within an allowable range in which patterns formed on the plurality of containers 1 are not different when they are viewed, and, as one example, within an allowable range of about ±10%.

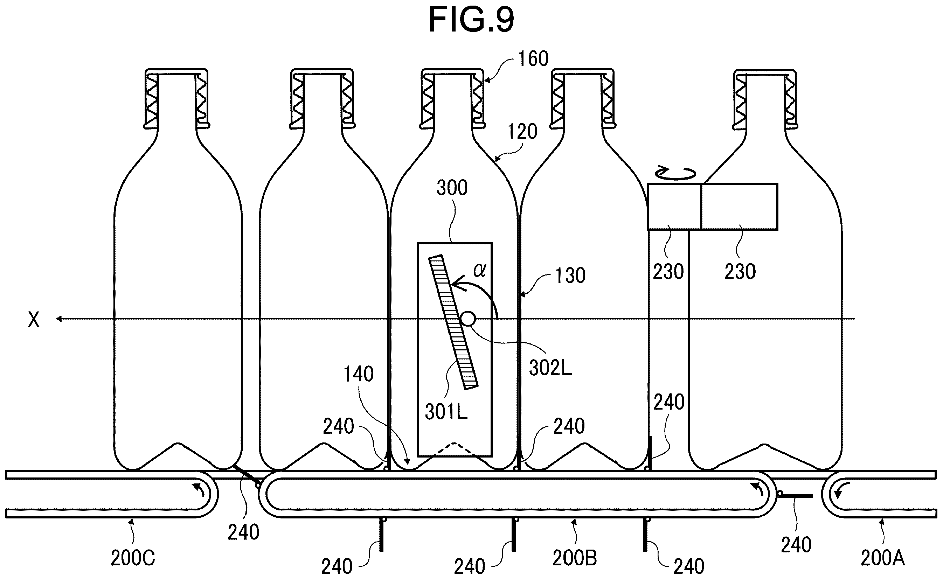

FIG. 9 is a side view of the modification illustrated in FIG. 7. The manufacturing line 200 includes a manufacturing line 200B that conveys the container 1 that is being irradiated with laser, a manufacturing line 200A that is located upstream of the manufacturing line 200B and that conveys the container 1 that is not being irradiated with laser, and manufacturing line 200C that is located downstream of the manufacturing line 200B and that conveys the container 1 that is not being irradiated with laser.

Each of the manufacturing lines 200A to 200C is configured with a conveying belt. The manufacturing line 200B includes the plurality of interval fixation units 240 at equal intervals.

The control device 400 illustrated in FIG. 7 causes the manufacturing line 200B to convey the container 1 at a lower speed than speeds at which the manufacturing line 200A and the manufacturing line 200C convey the containers 1.

With this configuration, the container 1 that is conveyed by the manufacturing line 200A at a high speed is pressed against and firmly attached to the container 1, which is conveyed by the manufacturing line 200B at a low speed, via the interval fixation unit 240.

Furthermore, the container 1 that is conveyed by the manufacturing line 200B at a low speed is pushed, at the end of the manufacturing line 200B by the interval fixation unit 240, to the manufacturing line 200C that performs conveyance at a high speed.

The irradiation unit 300 emits laser to the plurality of containers 1 that are conveyed by being firmly attached to one another via the interval fixation unit 240.

With this configuration, by conveying the container 1 by the manufacturing line 200B at a low speed, it is possible to increase a laser irradiation time for the container 1 and reliably form the pattern on the container 1, and, by conveying the containers 1 by the manufacturing lines 200A and 200C at high speeds, it is possible to increase the conveying speed of the containers 1 that are not being irradiated with laser, so that it is possible to improve productivity.

Furthermore, the irradiation unit 300 includes the laser array unit 301 that is arranged on a straight line at a constant angle $\alpha$ in a moving direction of the container 1, so that it is possible to simultaneously emit a plurality of pieces of laser light and improve productivity. The control device 400 is able to change the angle $\alpha$ in a range of 30 degrees to 150 degrees.

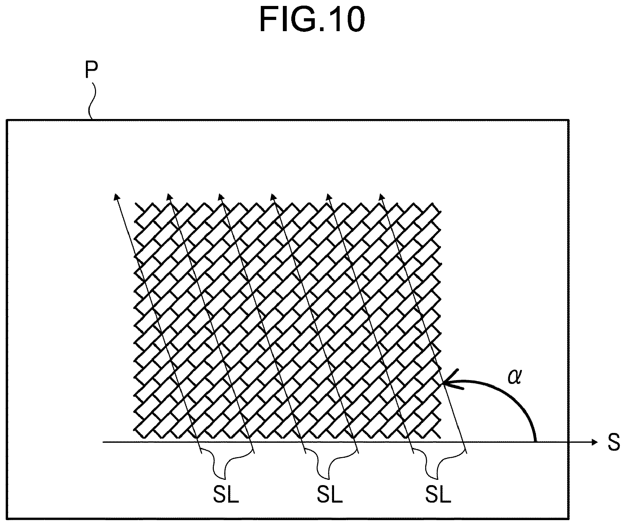

FIG. 10 is a diagram for explaining laser irradiation according to the modification illustrated in FIG. 7. The control device 400 has slice image information on an image P along slice lines SL that are inclined in accordance with the angle $\alpha$ at which the laser array unit 301 is inclined, and causes the laser array unit 301 to simultaneously emit a plurality of pieces of laser light in accordance with the slice image information.

The control device 400 moves the slice lines SL in synchronization with conveyance of the container 1 performed by the manufacturing line 200B, and changes the slice image information. The control device 400 divides each piece of the slice image information in accordance with the number of pieces of laser light from the laser array unit 301, performs conversion to an irradiation command corresponding to a position of each piece of the laser light, and conveys the commands to the irradiation unit 300. Definition in the vertical direction is changed in accordance with the angle $\alpha$ as represented by Expression below.

Definition (magnification with respect to a case where $\alpha$ is 90 degrees) = 1 / SIN($\alpha$)-fold

When $\alpha$ is set in a range from 30 degrees to 150 degrees, the definition ranges from the same definition to double definition. Accordingly, a range of an image in sliceable four vertical directions is from the same size to a half size.

As described above, by arranging the certain angle $\alpha$ for the laser array unit 301 and the slice lines SL, it is possible to reduce the interval of the laser light in the vertical direction and write a lot of information at a high speed with needed definition on the base material 1a of the container 1.

Meanwhile, at the same time, a disadvantage that a recording area on the base material 1a in the vertical direction is reduced; therefore, if information for which a wide region is not comparatively needed but definition is needed is to be written, for example, if a lot of information including text information using a small text font is to be written, it is preferable to set a certain angle $\alpha$.

In contrast, if a lot of information for which a relatively large area is needed but definition is not comparatively needed is to be written, for example, in the case of a graphic, it is preferable to set the angle $\alpha$ to approximately a right angle.

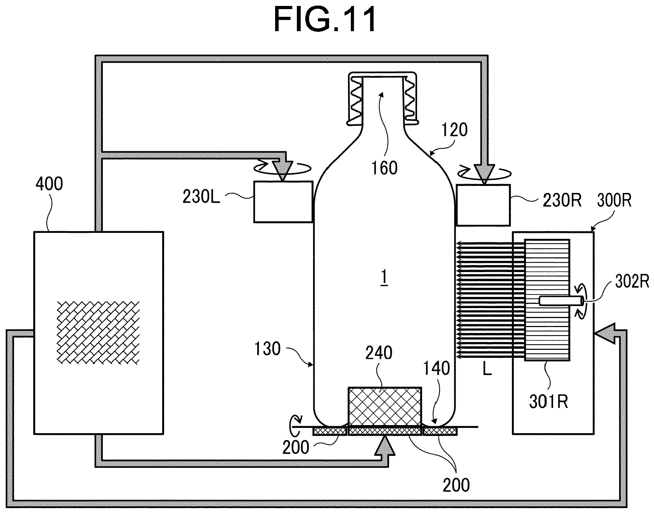

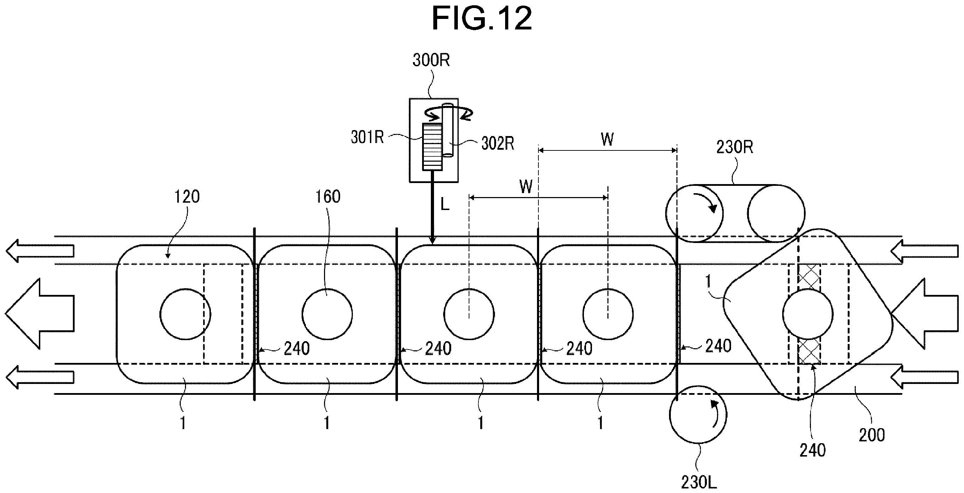

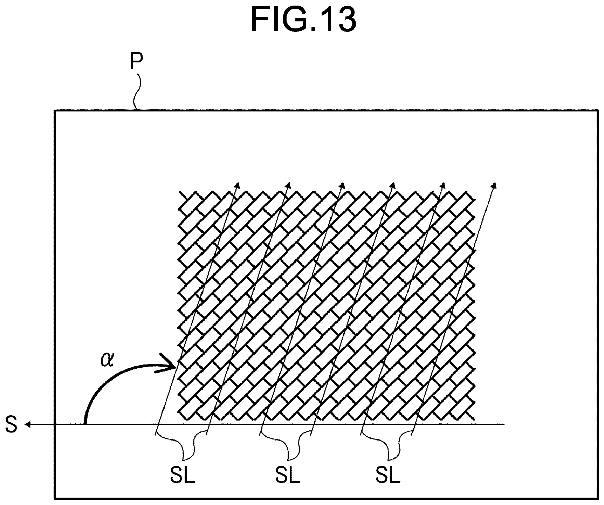

FIG. 11 is a diagram illustrating a second modification of the manufacturing apparatus illustrated in FIG. 4. FIG. 12 is a top view of the second modification illustrated in FIG. 11. FIG. 13 is a diagram for explaining laser irradiation according to the second modification illustrated in FIG. 11.

The second modification illustrated in FIG. 11 to FIG. 13 includes, instead of the irradiation unit 300L according to the modification illustrated in FIG. 8 to FIG. 10, an irradiation unit 300R that is arranged on a right side of the manufacturing line 200 in the conveying direction. Other configurations of the second modification are the same as those of the modification illustrated in FIG. 8 to FIG. 10.

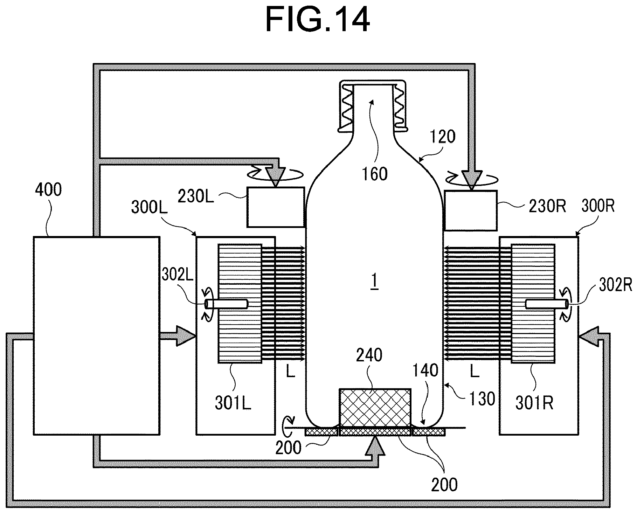

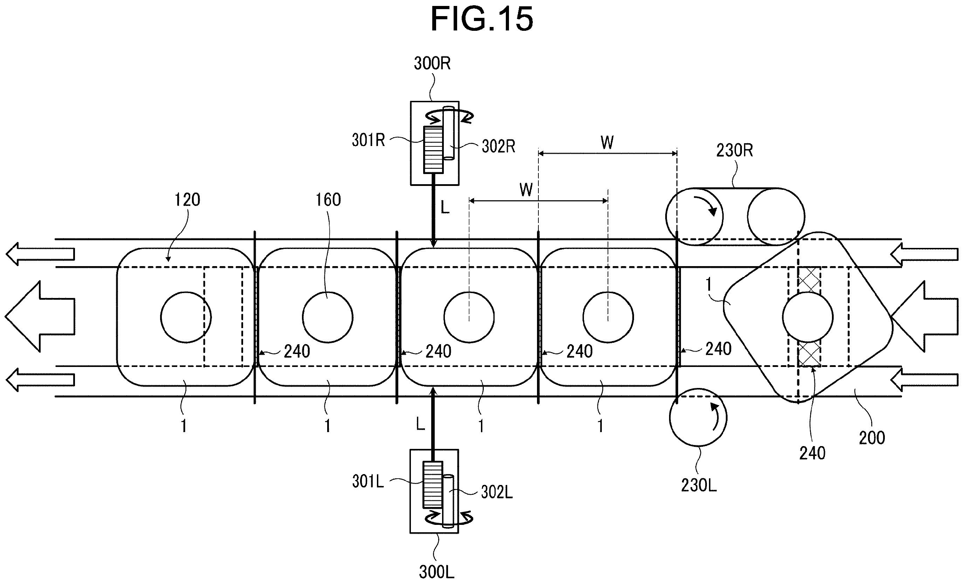

FIG. 14 is a diagram illustrating a third modification of the manufacturing apparatus illustrated in FIG. 4. FIG. 15 is a top view of the third modification illustrated in FIG. 14.

A third modification illustrated in FIG. 14 and FIG. 15 includes the irradiation unit 300L according to the modification illustrated in FIG. 8 to FIG. 10, and the irradiation unit 300R according to the second modification illustrated in FIG. 11 to FIG. 13. Other configurations of the third modification are the same as those of the modification illustrated in FIG. 8 to FIG. 10.

Conclusion

As described above, the manufacturing apparatus as one example of a pattern formation apparatus according to one embodiment includes the irradiation unit 300 that irradiates each of the containers 1 that are conveyed by the manufacturing line 200, which is one example of the conveying unit, with laser such that one of a light path length and a beam size at a position of the container 1 is approximately constant, and forms a pattern on a surface of each of the containers 1. The container 1 includes the base material 1a. The manufacturing apparatus may include the irradiation unit 300 that irradiates each of containing bodies, each including the container 1 containing contents, with laser such that one of a light path length and a beam size at a position of the containing body is approximately constant, and generate a pattern on a surface of each of the containing bodies.

With this configuration, it is possible to reduce variation in the pattern caused by variation in one of the laser light path length and the beam size at the position of the container 1.

The manufacturing apparatus, which is one example of the pattern formation apparatus according to the embodiment, includes the irradiation unit 300 that irradiates each of the containers 1 conveyed by the manufacturing line 200 with laser to form a pattern on a surface of each of the containers 1, and the manufacturing line 200 includes the movable rotation plate 210 that rotates the container 1, and conveys the container 1 while rotating the container 1.

With this configuration, it is possible to change an orientation of the irradiation position of the container 1 with respect to the laser irradiation direction, so that it is possible to reduce distortion of the pattern caused by the orientation of the irradiation position of the container 1 with respect to the laser irradiation direction.

The irradiation unit 300 is able to change a direction in which the laser is emitted, along a conveying direction of the container 1.

With this configuration, it is possible to track, with laser, the contained 1 being conveyed, so that it is possible to reduce variation in one of the laser light path length with respect to the irradiation position of the container 1 and the beam size at the position of the container 1, and it is possible to reduce variation in the pattern caused by the variation in one of the laser light path length and the beam size at the position of the container 1.

The manufacturing line 200 conveys the container 1 through a path for which one of the laser light path length with respect to the container 1 being conveyed and the beam size at the position of the container 1 is approximately constant.

With this configuration, it is possible to reliably reduce variation in the pattern caused by one of the laser light path length and the beam size at the position of the container 1. Meanwhile, it may be possible to cause the irradiation unit 300 to perform control such that one of the laser light path length and the beam size at the position of the container 1 is approximately constant.

The manufacturing apparatus, which is one example of the pattern formation apparatus according to the embodiment, includes the irradiation unit 300 that irradiates each of the containers 1 being conveyed by the manufacturing line 200 with laser to form a pattern on a surface of each of the containers 1, and the manufacturing line 200 conveys the container 1 through a path for which the tracking horizontal deflection device 310 of the irradiation unit 30 that emits laser is located inside, and, more preferably, through a path that is concentric with a rotation center of the tracking horizontal deflection device 310.

With this configuration, it is possible to maintain an approximately constant laser light path length with respect to the container 1 being conveyed or an approximately constant beam size at the position of the container 1, so that it is possible to reliably reduce variation in the pattern caused by variation in one of the laser light path length and the beam size at the position of the container 1.

The manufacturing line 200 includes the manufacturing line 200B that conveys the container 1 that is being irradiated with laser, the manufacturing line 200A that is located upstream of the manufacturing line 200B and that conveys the container 1 that is not being irradiated with laser, and the manufacturing line 200C that is located downstream of the manufacturing line 200B and that conveys the container 1 that is not being irradiated with laser, and causes a speed at which the manufacturing line 200B conveys the container 1, to be lower than speeds at which the manufacturing line 200A and the manufacturing line 200C convey the containers 1. The manufacturing line 200B is one example of a first conveying unit, and the manufacturing lines 200A and 200C are one example of second conveying units.

With this configuration, it is possible to increase a laser irradiation time for the container 1, reliably form a pattern on the container 1, and increase speeds at which the containers 1 that are not being irradiated with laser, so that it is possible to improve productivity.

A manufacturing method, which is one example of a pattern formation method according to one embodiment, includes a step of conveying a plurality of containers 1, and a step of irradiating each of the containers 1 being conveyed with laser such that one of a light path length with respect to each of the conveyed containers 1 and a beam size at the position of the container 1 is approximately constant, and forming a pattern on a surface of each of the containers 1.

With this configuration, it is possible to reduce variation in the pattern caused by variation in one of the laser light path length and the beam size at the position of the container 1.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

**Claims**

1. A pattern formation apparatus comprising an irradiation unit (300) configured to irradiate each of a plurality of base materials (1a) being conveyed, with laser such that one of a light path length and a beam size at a position of each base material (1a) is approximately constant, to form a pattern (11) on a surface of each of the plurality of base materials (1a), the plurality of base materials (1a) being base materials of polyethylene terephthalate (PET) bottles made of a material including resin and configured to contain a beverage,
**characterised in that**
the pattern formation apparatus is configured:

> to convey the plurality of base materials (1a) through a path concentric with the irradiation unit (300) while rotating the plurality of base materials (1a), the irradiation unit being located inside for the path;
> to change a direction in which the laser is emitted, along a direction in which the plurality of base materials (1a) are conveyed; and
> to convey each base material (1a) through such a path that the one of the light path length of the laser with respect to each base material (1a) being conveyed and the beam size at the position of each base material (1a) is approximately constant by changing the direction in which the laser is emitted in synchronization with the conveying speed of each base material.

2. The pattern formation apparatus according to claim 1, configured to cause a conveyance speed of a base material being irradiated with the laser, to be lower than a conveyance speed of a base material not being irradiated with the laser.

3. A pattern formation method using an irradiation unit (300), the method comprising:

> conveying a plurality of base materials (1a) through a path concentric with the irradiation unit (300) while rotating the plurality of base materials (1a), the irradiation unit being located inside for the path, the plurality of base materials (1a) being base materials of polyethylene terephthalate (PET) bottles made of a material including resin and configured to contain a beverage;
irradiating, using the irradiation unit (300), each of the plurality of base materials (1a) being conveyed, with laser such that one of a light path length and a beam size at a position of each base material (1a) is approximately constant by changing a direction in which the laser is emitted in synchronization with the conveying speed of each base material; and
forming a pattern (11) on a surface of each of the plurality of base materials (1a).

**Patentansprüche**

1. Musterbildungsvorrichtung, aufweisend eine Bestrahlungseinheit (300), die konfiguriert ist, jedes von einer Vielzahl von Basis- bzw. Trägermaterialien (1a), die transportiert werden, mit Laser zu bestrahlen, so dass eines von einer Lichtweglänge und einer Strahlgröße an einer Position von jedem Basis- bzw. Trägermaterial (1a) annähernd konstant ist, um ein Muster (11) auf einer Fläche von jedem der Vielzahl von Basis- bzw. Trägermaterialien (1a) zu bilden, wobei die Vielzahl von Basis- bzw. Trägermaterialien (1a) Basis- bzw. Trägermaterialien von Polyethylenterephthalat (PET)-Flaschen sind, die aus einem Material hergestellt sind, einschließlich Harz bzw. Kunstharz, und konfiguriert sind, ein Getränk zu enthalten bzw. zu beinhalten,
**dadurch gekennzeichnet, dass** die Musterbildungsvorrichtung konfiguriert ist:

> die Vielzahl von Basis- Trägermaterialien (1a) durch einen Weg zu transportieren, der konzentrisch mit der Bestrahlungseinheit (300) ist, während die Vielzahl von Basis- bzw. Trägermaterialien (1a) gedreht wird, wobei die Bestrahlungseinheit innerhalb des Weges gelegen ist;
> eine Richtung zu ändern, in welche der Laser emittiert wird, und zwar entlang einer Richtung, in welcher die Vielzahl von Basis- bzw. Trägermaterialien (1a) transportiert wird; und
> jedes Basis- bzw. Trägermaterial (1a) durch solch einen Weg zu transportieren, dass die eine von der Lichtweglänge des Lasers in Bezug auf jedes Basis- bzw. Trägermaterial (1a), das transportiert wird und der Strahlgröße an der Position von jedem Basis- bzw. Trägermaterial (1a) annähernd konstant ist, und zwar durch Ändern der Richtung, in welcher der Laser in Synchronisation mit der Transportgeschwindigkeit von jedem Basis- bzw. Trägermaterial emittiert wird.

**2.** Musterbildungsvorrichtung gemäß Anspruch 1, konfiguriert, um eine Transportgeschwindigkeit von einem Basis- bzw. Trägermaterial zu veranlassen, das mit dem Laser bestrahlt wird, geringer als eine Transportgeschwindigkeit von einem Basis- bzw. Trägermaterial zu sein, das nicht mit den Laser bestrahlt wird.

**3.** Musterbildungsverfahren, das eine Bestrahlungseinheit (300) verwendet, wobei das Verfahren aufweist:

Transportieren einer Vielzahl von Basis- bzw. Trägermaterialien (1a) durch einen Weg, der konzentrisch mit der Bestrahlungseinheit (300) ist, während die Vielzahl von Basis- bzw. Trägermaterialien (1a) gedreht wird, wobei die Bestrahlungseinheit innerhalb des Weges gelegen ist, wobei die Vielzahl von Basis- bzw. Trägermaterialien (1a) Basis- bzw. Trägermaterialien von Polyethylenterephthalat (PET)-Flaschen sind, die aus einem Material hergestellt sind, einschließlich Harz bzw. Kunstharz und konfiguriert sind, ein Getränk zu enthalten bzw. zu beinhalten;

Bestrahlen, wobei die Bestrahlungseinheit (300) verwendet wird, von jedem der Vielzahl von Basis- bzw. Trägermaterialien (1a), die transportiert werden, mit Laser, so dass eine von einer Lichtweglänge und einer Strahlgröße an einer Position von jedem Basis- bzw. Trägermaterial (1a) annähernd konstant ist, und zwar durch Ändern einer Richtung, in welcher der Laser in Synchronisation mit der Transportgeschwindigkeit von jedem Basis- bzw. Trägermaterial emittiert wird; und

Bilden eines Musters (11) auf einer Fläche von jedem der Vielzahl von Basis- bzw. Trägermaterialien (1a).

**Revendications**

**1.** Appareil de formation de motifs comprenant une unité d'irradiation (300) configurée pour irradier chacun d'une pluralité de matériaux de base (1a) transportés, avec un laser tel que l'une d'une longueur de trajet lumineux et d'une taille de faisceau au niveau d'une position de chaque mátériau de base (1a) est approximativement constante, pour former un motif (11) sur une surface de chacun de la pluralité de matériaux de base (1a), la pluralité de matériaux de base (1a) étant des matériaux de base de bouteilles en polyéthylène téréphtalate ( PET) constitués d'un mátériau comprenant de la résine et configurés pour contenir une boisson, **caractérisé en ce que** l'appareil de formation de motifs est configuré :

pour transporter la pluralité de matériaux de base (1a) à travers un trajet concentrique à l'unité d'irradiation (300) tout en faisant tourner la pluralité de matériaux de base (1a), l'unité d'irradiation étant située à l'intérieur du chemin ;

pour changer une direction dans laquelle le laser est émis, le long d'une direction dans laquelle la pluralité de matériaux de base (1a) sont transportés ; et

pour transporter chaque mátériau de base (1a) à travers un trajet tel que la longueur du trajet lumineux du laser par rapport à chaque mátériau de base (1a) transporté et la taille du faisceau à la position de chaque mátériau de base (1a) soient approximativement constantes en changeant la direction dans laquelle le laser est émis en synchronisation avec la vitesse de transport de chaque mátériau de base.

**2.** Appareil de formation de motifs selon la revendication 1, configuré pour amener une vitesse de transport d'un mátériau de base irradié avec le laser à être inférieure à une vitesse de transport d'un mátériau de base non irradié avec le laser.

**3.** Procédé de formation de motifs utilisant une unité d'irradiation (300), le procédé comprenant :

le transport d'une pluralité de matériaux de base (1a) à travers un trajet concentrique à l'unité d'irradiation (300) tout en faisant tourner la pluralité de matériaux de base (1a), l'unité d'irradiation étant située à l'intérieur du trajet, la pluralité de matériaux de base (1a) étant des matériaux de base de bouteilles en polyéthylène téréphtalate (PET) constitués d'un mátériau comprenant de la résine et configurés pour contenir une boisson ;

l'irradiation, en utilisant l'unité d'irradiation (300), chacun de la pluralité de matériaux de base (1a) étant transporté, avec un laser de telle sorte que la longueur du trajet lumineux et la taille du faisceau au niveau d'une position de chaque mátériau de base (1a) soient approximativement constantes en changeant une direction dans laquelle le laser est émis en synchronisation avec la vitesse de transport de chaque mátériau de base ; et

la formation d'un motif (11) sur une surface de chacun de la pluralité de matériaux de base (1a).

# FIG.1

ラベルレス

# FIG.2A

# FIG.2B

EP 3 995 249 B1

FIG.3A

FIG.3B

FIG.4

# FIG.5

# FIG.6A

# FIG.6B

# FIG.6C

# FIG.6D

# FIG.6E

# FIG.7

# FIG.8

EP 3 995 249 B1

# FIG.9

EP 3 995 249 B1

# FIG.10

# FIG.11

FIG.12

# FIG.13

# FIG.14

FIG.15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015217403 A1
- JP 2011011819 A